# EUROPÄISCHE PATENTSCHRIFT

(11) **EP 3 730 224 B1**
(45) Veröffentlichungstag und Bekanntmachung des Hinweises auf die Patenterteilung: **02.11.2022**
(21) Anmeldenummer: 19171336.1
(22) Anmeldetag: 26.04.2019
(51) Int. Cl.: B07B 1/04, B07B 1/28, B07B 1/46, B07B 13/16, B07B 7/06, B07B 11/06, G01N 1/34, G01N 33/00

(54) **ENTSTAUBUNGSANLAGE**
DUST REMOVAL SYSTEM
INSTALLATION DE DÉPOUSSIÉRAGE

(43) Veröffentlichungstag der Anmeldung: 28.10.2020
(73) Patentinhaber: Kraemer, Thilo, 64291 Darmstadt (DE)
(72) Erfinder: Kraemer, Thilo, 64291 Darmstadt (DE)
(74) Vertreter: Hamel, Armin

(56) Entgegenhaltungen:
- WO-A1-94/16828
- FR-A- 1 129 725
- US-A1- 2013 056 397

## Beschreibung

Mit einem Testgerät für kleinvolumige Schüttgüter werden Schüttgüter, wie beispielsweise Tabletten, Körner oder Oblongs, vermessen. Neben der Masse der Schüttgüter können auch deren Länge, Breite, chemische Zusammensetzung, Qualität sowie Härte ermittelt werden. Dabei können Staub oder Bruchstücke von diesen Schüttgütern die Messungen verfälschen.

Aus FR 1 129 725 A ist ein Abfüllsieb zum Sieben von Produkten unterschiedlicher Partikelgröße bekannt. Obwohl das Abfüllsieb speziell für das Sieben von Kohle entwickelt wurde, ist es auch für das Sieben von anderen Materialien anwendbar, beispielsweise Gemische aus Kieselsteinen, Kies und Sand.

US 2013/0056397 A1 beschreibt eine Kombination aus einer Schubkarre und einer Siebvorrichtung. Die Siebvorrichtung besitzt einen äußeren Rahmen und ein zentrales Sieb. Ein Ende des Rahmens ist an einer Lippe einer Seitenwand der Schubkarre montierbar, da der Rest des Siebs dadurch in Position gehalten wird, indem ein einem Kanal gegenüberliegendes Ende des Siebs mit der gegenüberliegenden Seitenwand der Schubkarre in Eingriff gebracht wird.

Schließlich ist aus WO 94/16828 A1 ein Getreideprozessor zum Trennen und Messen von Bestandteilen einer Getreideprobe bekannt. Diese Bestandteile laufen durch ein Rotationssieb mit einem oder mehreren Siebabschnitten mit unterschiedlichen Perforationen, so dass eine selektive Trennung auf Basis der Größe der Bestandteile erfolgt.

Aufgabe der vorliegenden Erfindung ist es, Schüttgüter frei von Staub zu bekommen, um so ein Eindringen von Staub oder Bruchstücken von Schüttgütern in ein Testgerät zu verhindern.

Diese Aufgabe wird durch die Merkmale der Patentansprüche 1 und 4 gelöst.

Die Erfindung betrifft damit eine Entstaubungsanlage für ein Testgerät für kleinvolumige Schüttgüter umfassend
- eine Kammer mit einer Beschickungsöffnung zum Einbringen von kleinvolumigen Schüttgütern in die Kammer,
- wobei die Kammer eine erste Ausgangsöffnung für Staub sowie eine zweite Ausgangsöffnung für Schüttgüter umfasst, wobei oberhalb der ersten Ausgangsöffnung sowie der zweiten Ausgangsöffnung ein mittels eines Antriebs um eine Achse schwenkbarer Boden angeordnet ist,
- wobei der Boden einen ersten sowie einen zweiten Abschnitt aufweist,
- wobei der erste Abschnitt mehrere Öffnungen umfasst, die eine Siebfunktion besitzen, so dass Staub durch die erste Ausgangsöffnung aus der Kammer entfernbar ist,
- und wobei der zweite Abschnitt des Bodens geschlossen ist.

Vorteilhaft bei dieser Entstaubungsanlage ist, dass die Entstaubungsanlage sehr kompakt aufgebaut ist. Mit der Entstaubungsanlage ist es möglich, in kürzester Zeit Staub oder andere unerwünschten Fremdkörper, wie zum Beispiel Bruchstücke von Schüttgütern, zu entfernen. Im Folgenden werden diese Fremdkörper sowie Staub lediglich als Staub bezeichnet. Von Vorteil ist ferner, dass der Boden leicht austauschbar ist. Dadurch ist es möglich, Staub von Schüttgütern unterschiedlichen Typs zu entfernen, weil Böden bereitgestellt werden können, deren Öffnungen im ersten Abschnitt unterschiedliche Durchmesser und Formen aufweisen. Vorteilhafterweise kann der Boden auch mittels eines Antriebs in Vibration versetzt werden, wodurch Staub schnell und effektiv entfernt werden kann. Diese Entstaubungsanlage kann einfach auf ein Testgerät gesetzt werden, wobei nach Entstaubung des Schüttguts das Schüttgut einfach über die zweite Ausgangsöffnung in das Testgerät eingebracht werden kann. Die Entstaubungsanlage ist dabei derart ausgebildet, dass auch ein pneumatischer Förderer, zum Beispiel ein Zyklon, einfach an die Einbringungsöffnung angeschlossen werden kann. Dadurch ist es möglich, dass die Schüttgüter nicht nur einfach per Hand, sondern auch über einen pneumatischen Förderer in die Entstaubungsanlage angebracht werden können.

Erfindungsgemäss ist der erste Abschnitt des Bodens in einer ersten Stellung in Richtung der ersten Ausgangsöffnung geneigt, so dass das Schüttgut zusammen mit dem Staub auf den ersten Abschnitt des Bodens fällt, der mit Öffnungen mit Siebfunktion versehen ist. Über diese Öffnungen fällt Staub in die erste Ausgangsöffnung, über die der Staub schließlich die Kammer verlässt. Vorteilhaft ist dabei, dass in dieser ersten Stellung der Boden die zweite Ausgangsöffnung vollständig verschließt, so dass kein Staub über diese zweite Ausgangsöffnung die Kammer verlassen kann. Ist somit die Entstaubungsanlage mit einem Testgerät verbunden, so kann kein Staub in das Testgerät gelangen.

Ist der Boden in einer zweiten Stellung in Richtung der zweiten Ausgangsöffnung geneigt, so wird die zweite Ausgangsöffnung geöffnet, so dass das Schüttgut über diese zweite Ausgangsöffnung aus der Kammer entfernt wird.

In einer weiteren bevorzugten Ausführungsform ist ein Dichtelement vorgesehen, mit dem der zweite Abschnitt des Bodens in Kontakt steht, wenn der Boden die erste Stellung einnimmt. Dadurch wird effektiv verhindert, dass Staub durch die zweite Ausgangsöffnung aus der Kammer gelangt.

Die Erfindung betrifft auch ein Verfahren zum Entfernen von Staub von Schüttgütern mittels der Entstaubungsanlage. Das Verfahren umfasst folgende aufeinanderfolgende Schritte:
In einem ersten Schritt wird der Boden in die erste Stellung gebracht.

In einem zweiten Schritt wird Schüttgut über die Beschickungsöffnung in die Kammer eingebracht, wobei das Schüttgut auf den ersten Abschnitt des Bodens gelangt. Da dieser erste Abschnitt des Bodens mit Öffnungen versehen ist, fällt der Staub durch die Öffnungen und verlässt die Kammer über die Ausgangsöffnung, die sich unterhalb des ersten Abschnitts des Bodens befindet.

In einem dritten Schritt wird der Boden in die zweite Stellung gebracht, wodurch die zweite Ausgangsöffnung geöffnet wird und das Schüttgut über diese zweite Ausgangsöffnung die Kammer verlässt. Über die zweite Ausgangsöffnung kann das Schüttgut dann beispielsweise in ein mit der Entstaubungsanlage verbundenes Testgerät gelangen, so dass das Schüttgut in dem Testgerät vermessen werden kann.

Bevorzugt wird der Boden während des zweiten Schrittes über den Antrieb in Vibration versetzt.

Schließlich betrifft die Erfindung noch eine Anordnung, umfassend die Entstaubungsanlage sowie ein Testgerät für Schüttgüter, die in der Entstaubungsanlage von Staub befreit wurden. Da an den zu vermessenden Schüttgütern kein Staub mehr anhaftet, können fehlerfreie Messergebnisse erhalten werden.

Es versteht sich, dass die verschiedenen Ausgestaltungen der Erfindung in technologisch sinnvoller Weise miteinander kombiniert werden können.

Bevorzugte Ausführungsformen der Entstaubungsanlage werden beispielhaft anhand von Zeichnungen erläutert. Die Figuren der Zeichnungen zeigen im Einzelnen:
- Figur 1: einen Vertikalschnitt durch eine erste Variante einer Entstaubungsanlage;
- Figur 2: eine weitere Ansicht der in Figur 1 dargestellten Entstaubungsanlage;
- Figur 3: eine erste Ansicht einer Anordnung, aufweisend die in Figur 1 gezeigte Entstaubungsanlage und ein Testgerät;
- Figur 4: eine zweite Ansicht der in Figur 3 gezeigten Anordnung;
- Figur 5: einen Vertikalschnitt durch eine zweite Variante einer Entstaubungsanlage und
- Figur 6: eine weitere Ansicht der in Figur 5 gezeigten Entstaubungsanlage.

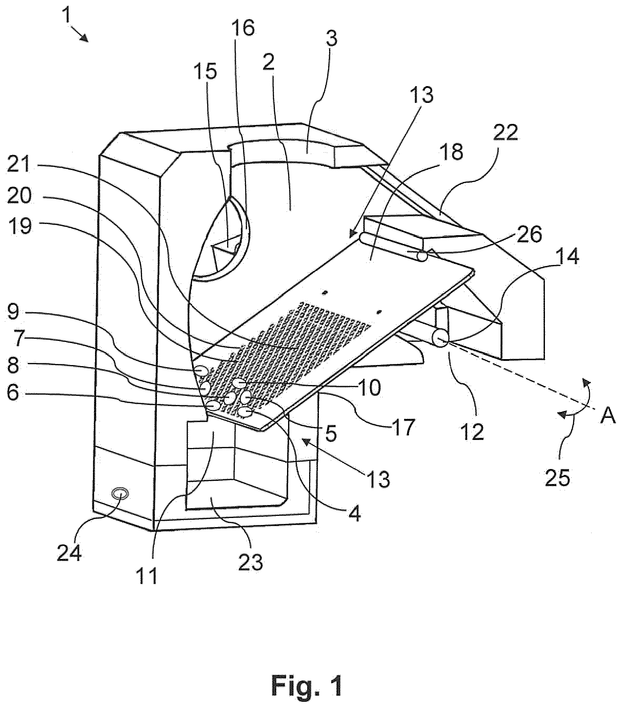

In Figur 1 ist ein Vertikalschnitt durch eine erste Variante einer Entstaubungsanlage 1 gezeigt. Diese Entstaubungsanlage 1 kann an ein Testgerät für das Vermessen kleinvolumiger Schüttgüter angebracht sein. Das Testgerät ist allerdings in Figur 1 nicht gezeigt.

Die Entstaubungsanlage 1 umfasst eine Kammer 2 mit einer Beschickungsöffnung 3, über die kleinvolumige Schüttgüter 4 bis 10 in die Kammer 2 eingebracht werden können. Mit diesen Schüttgütern 4 bis 10 gelangt auch Staub (nicht dargestellt) in die Kammer 2. Die Kammer 2 weist eine erste Ausgangsöffnung 11 für Staub sowie eine zweite Ausgangsöffnung 12 für die Schüttgüter 4 bis 10 auf, wobei oberhalb der ersten Ausgangsöffnung 11 sowie der zweiten Ausgangsöffnung 12 ein um eine Achse A schwenkbarer Boden 13 angeordnet ist. Dazu kann der Boden 13 beispielsweise an einer schwenkbaren Stange 14 fixiert sein, die über einen Antrieb 15, der außerhalb der Kammer 2 eingebracht ist und über ein erstes Sichtfenster 16 zumindest teilweise zu sehen ist, bewegt werden. Das Schwenken ist durch einen Bewegungspfeil 25 angedeutet. Durch das Schwenken führt der Boden 13 eine Kippbewegung durch.

Neben dem ersten Sichtfenster 16 kann auch ein zweites Sichtfenster 22 vorgesehen sein. Über diese Sichtfenster 16, 22 kann ein Benutzer beobachten, wie das Schüttgut 4 bis 10 von Staub befreit wird.

Der Boden 13 ist in einen ersten Abschnitt 17 sowie einen zweiten Abschnitt 18 unterteilt, wobei der erste Abschnitt 17 Öffnungen umfasst, die eine Siebfunktion besitzen. In Figur 1 sind nur einige der Öffnungen mit Bezugszeichen versehen, nämlich mit den Bezugszeichen 19, 20, 21. Die Öffnungen 19, 20, 21 bilden somit ein Sieb. Damit kann Staub durch die Öffnungen 19, 20, 21 des Bodens 13 fallen und so zur ersten Ausgangsöffnung 11 gelangen. Zusätzlich kann der Boden 13 durch den Antrieb 15 noch in Vibration versetzt werden, um das Schüttgut 4 bis 10 noch schneller vom Staub zu befreien. Möglich ist aber auch, einen zusätzlichen Vibrationsantrieb für die Vibration vorzusehen, der ebenfalls außerhalb der Kammer 2 angeordnet ist, jedoch in Figur 1 nicht dargestellt ist. Durch die Vibration wird sichergestellt, dass der komplette Staub aus der Kammer 2 entfernt wird. Der Staub fällt dann über die erste Ausgangsöffnung 11 in einen Auffangbehälter 23. Dieser Auffangbehälter 23 kann - wie in Figur 1 angedeutet - als Schublade 23 mit Griff 24 ausgebildet sein. Gerade wenn der Auffangbehälter 23 wie eine Schublade ausgebildet ist, kann der in den Auffangbehälter 23 gefallene Staub durch Herausziehen des Auffangbehälters 23 leicht entfernt werden.

In Figur 1 befindet sich der Boden 13 der Entstaubungsanlage 1 in einer ersten Stellung. In dieser ersten Stellung ist der Boden 13 in Richtung der ersten Ausgangsöffnung 11 geneigt. Der Boden 13 verschließt dabei mit dem zweiten Abschnitt 18 die zweite Ausgangsöffnung 12. Der zweite Abschnitt 18 des Bodens 13 weist keine Öffnungen auf und ist daher geschlossen. Zusätzlich ist ein Dichtelement 26, zum Beispiel in Form einer Dichtlippe aus Elastomer, vorgesehen, das verhindert, dass Staub aus der Kammer 2 in die zweite Ausgangsöffnung 12 gelangt.

Wurde über die Beschickungsöffnung 3 das Schüttgut 4 bis 10 in die Kammer 2 eingebracht, so wird das Schüttgut 4 bis 10 in der ersten Stellung des Bodens 13 auf den ersten Abschnitt 17 des Bodens 13 befördert. Dabei fällt der Staub durch die Öffnungen des Bodens 13 in Richtung der ersten Ausgangsöffnung 11. Über die Ausgangsöffnung 11 fällt der Staub schließlich in den Auffangbehälter 23.

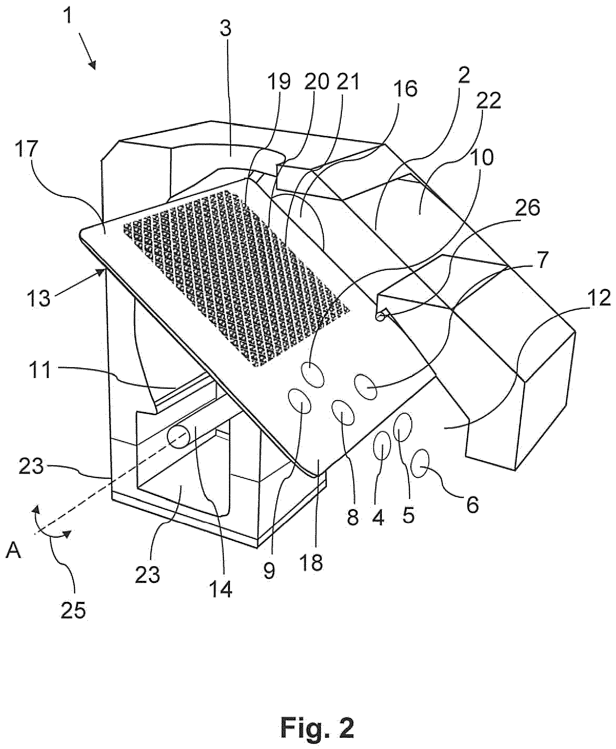

In Figur 2 ist gezeigt, wie der Boden 13 der Entstaubungsanlage 1 nach Entfernung des Staubs durch Kippbewegung in die zweite Stellung bewegt wurde. Durch das Kippen des Bodens 13 ist die zweite Ausgangsöffnung 12 freigelegt, so dass die Schüttgüter 4 bis 10 aus der Kammer 2 entfernt werden, weil diese Schüttgüter 4 bis 10 durch die Schräglage des Bodens 13 von dem ersten Abschnitt 17 des Bodens 13 über den zweiten Abschnitt 18 des Bodens 13 rutschen und so schließlich vom Boden 13 in Richtung der zweiten Ausgangsöffnung 12 fallen.

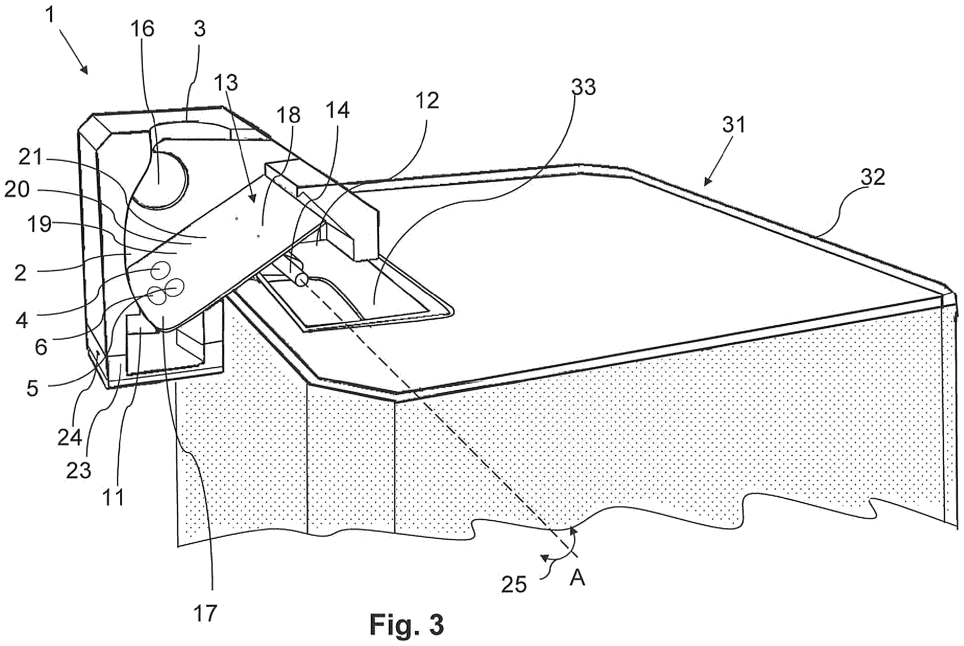

In Figur 3 ist eine Anordnung 30 aus der Entstaubungsanlage 1 und einem Testgerät 31 gezeigt. Die Entstaubungsanlage 1 ist dezentral am Testgerät 31 angebracht, was den Vorteil hat, dass kein Staub in das Testgerät 31 gelangen kann. Vorteilhaft bei der Anordnung 30 ist zudem, dass die Entstaubungsanlage 1 einfach an das Testgerät 31 montiert und auch wieder entfernt werden kann.

Das Testgerät 31 ist nur schematisch und ausschnittsweise dargestellt, weil der Aufbau eines solchen Testgeräts einem Fachmann bekannt ist. Auch ist in der Figur 3 die Entstaubungsanlage 1 der Übersicht halber nicht mit allen Bezugszeichen versehen.

Das Testgerät 31 weist auf seiner Oberseite 32 eine Öffnung 33 auf, auf der die Entstaubungsanlage 1 angeordnet ist, wobei die zweite Ausgangsöffnung 12 direkt oberhalb der Öffnung 33 liegt, damit die Schüttgüter 4, 5, 6 aus der Kammer 2 der Entstaubungsanlage 1 in das Testgerät 31 gelangen können. Dass die Entstaubungsanlage 1 in Figur 3 nicht die komplette Öffnung 33 des Testgeräts 31 überdeckt, liegt daran, dass ein Vertikalschnitt durch die Entstaubungsanlage 1 durchgeführt wurde, damit das Innere der Kammer 2 erkennbar ist.

Der Boden 13 befindet sich in der ersten Stellung, so dass die Schüttgüter 4, 5, 6 auf dem ersten Abschnitt 17 des Bodens 13 liegen, weil der Boden 13 in Richtung der ersten Ausgangsöffnung 11 geneigt ist. Der Boden 13 liegt mit seinem zweiten Abschnitt 18 an der Dichtung 26, die an einem Vorsprung 28 angebracht ist. Dieser Vorsprung 28 definiert auch die maximale Neigung des Bodens 13 in der ersten Stellung, weil der Vorsprung 28 eine weitere Bewegung und damit eine noch größere Schräglage des Bodens 13 verhindert und somit als Sperre dient. In dieser ersten Stellung wird der Boden 13 vorzugsweise noch in Vibration versetzt, so dass der Staub die Kammer 2 über die Öffnungen 19, 20, 21 des Bodens 13 vollständig verlässt und schließlich in den Auffangbehälter 23 gelangt. Die im Boden 13 eingebrachten Öffnungen 19, 20, 21 bilden somit ein Sieb.

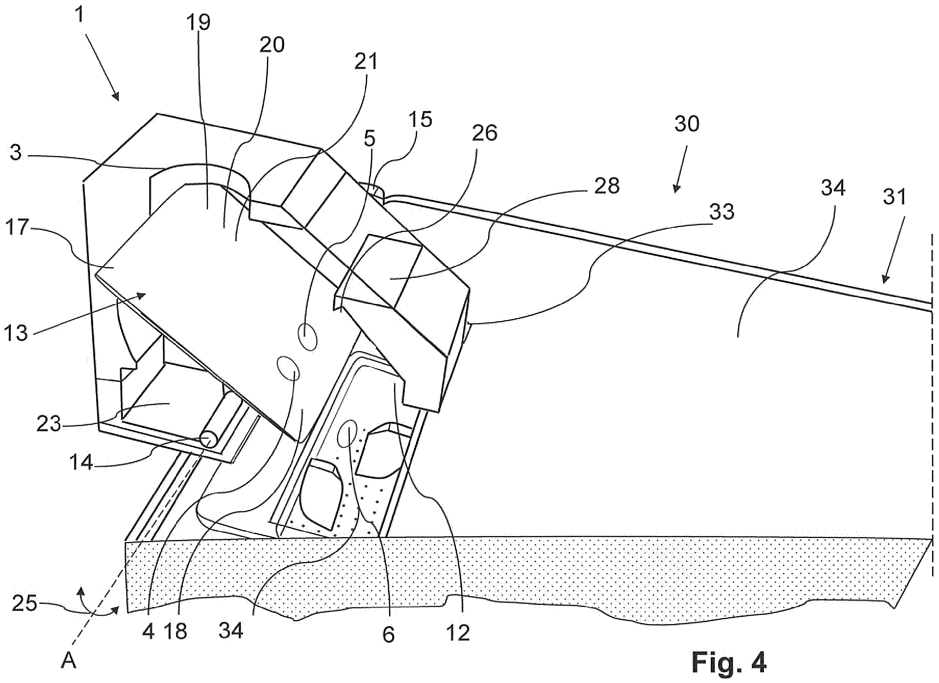

Nachdem der Staub aus der Kammer 2 entfernt wurde, wird der Boden 13 in die andere Richtung geschwenkt, so dass der Boden 13 in die zweite Stellung bewegt wird. Diese zweite Stellung ist in Figur 4 gezeigt. In dieser zweiten Stellung ist die zweite Ausgangsöffnung 12 offen, weil der Abschnitt 18 des Bodens 13 sie nicht mehr abdeckt, so dass die Schüttgüter 4, 5, 6 durch diese zweite Ausgangsöffnung 12 sowie die direkt darunter angeordnete Öffnung 33 des Testgeräts 31 fallen können. Unterhalb der Öffnung 33 ist in dem Testgerät 31 eine Vereinzelungsvorrichtung 34 vorgesehen, die dazu dient, die Schüttgüter 4, 5, 6 zu vereinzeln, damit immer nur ein Schüttgut in die entsprechenden Messstationen innerhalb des Testgeräts 31 transportiert wird und dort vermessen werden kann.

Da die Schüttgüter staubfrei sind, werden die erhaltenen Messwerte nicht verfälscht, da immer nur das Schüttgut, jedoch keine Fremdkörper vermessen werden.

Es versteht sich, dass auch in dieser zweiten Stellung der Boden 13 in Vibration versetzt werden kann, um eventuell am Boden 13 anhaftende Schüttgüter von diesem zu lösen.

Im Folgenden wird das Verfahren zum Entfernen von Staub von den Schüttgütern mittels der Entstaubungsanlage 1 kurz beschrieben. Das Verfahren umfasst folgende aufeinanderfolgende Schritte:
In einem ersten Schritt wird der Boden 13 in die erste Stellung gebracht.

In einem zweiten Schritt wird Schüttgut über die Beschickungsöffnung 3 in die Kammer 2 eingebracht, wobei das Schüttgut auf den ersten Abschnitt 17 des Bodens 13 gelangt. Da dieser Abschnitt 17 des Bodens 13 mit Öffnungen 19, 20, 21 versehen ist, fällt der Staub durch diese Öffnungen 19, 20, 21 und verlässt die Kammer 2 schließlich über die erste Ausgangsöffnung 11.

In einem dritten Schritt wird der Boden 13 in die zweite Stellung gebracht, wodurch die zweite Ausgangsöffnung 12 geöffnet wird und das Schüttgut über diese zweite Ausgangsöffnung 12 die Kammer 2 verlässt. Über die zweite Ausgangsöffnung 12 kann das Schüttgut dann beispielsweise in ein mit der Entstaubungsanlage 1 verbundenes Testgerät 31 gelangen, so dass das Schüttgut in diesem Testgerät 31 vermessen werden kann.

Bevorzugt wird der Boden 13 während des zweiten Schrittes mittels des Antriebs 15 oder einen speziellen Vibrationsantrieb in Vibration versetzt.

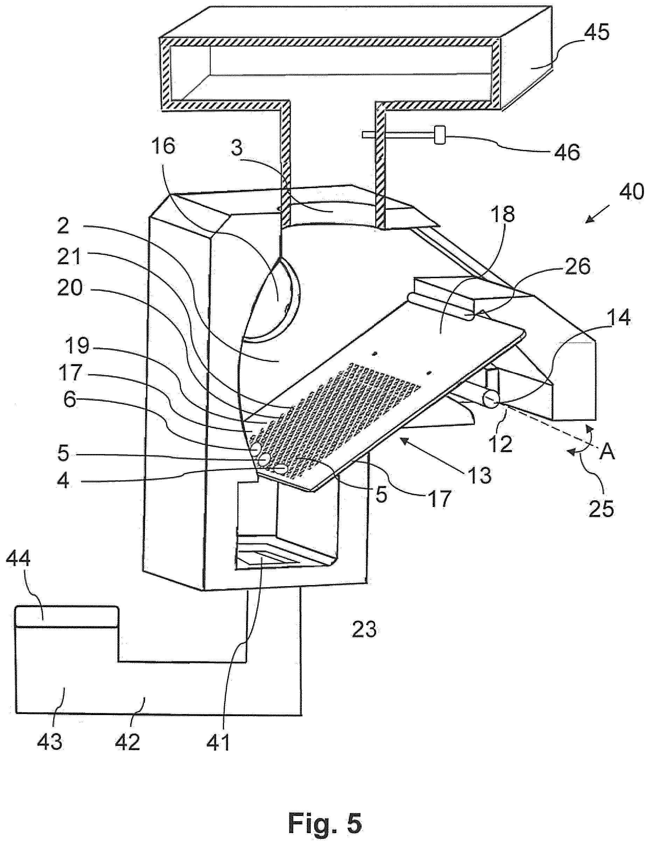

In Figur 5 ist ein Vertikalschnitt durch eine zweite Variante einer Entstaubungsanlage gezeigt. Diese Entstaubungsanlage 40 besitzt im Unterschied zu der Entstaubungsanlage 1 keinen Auffangbehälter 23, sondern eine Öffnung 41, an die sich eine Leitung 42 anschließt, zum Beispiel ein Rohr oder ein Schlauch, die mit einem Auffangbehälter 43 verbunden ist. Dieser Auffangbehälter 43 weist einen Filter 44 auf. Dieser Filter 44 gewährleistet, dass lediglich Luft, jedoch kein Staub aus dem Auffangbehälter 43 entweichen kann. Aufgrund dieses einzigen Unterschieds wurden die anderen Bezugszahlen der Entstaubungsanlage 1 beibehalten.

Befindet sich der Boden 13 in der ersten Stellung, so wird über einen pneumatischen Förderer 45, der in Figur 5 als Zyklon 45 ausgebildet ist und auf der Entstaubungsanlage 40 sitzt, Schüttgut 4, 5, 6 über die Beschickungsöffnung 3 in die Entstaubungsanlage 40 eingebracht. Vorzugsweise wird nur eine bestimmte Menge an Schüttgut in die Kammer 2 eingebracht. Nachdem die entsprechende Menge an Schüttgut in die Kammer 2 eingebracht wurde, wird mittels des Zyklons 45 weiterhin Luft durch die Kammer 2 geblasen. Zwischen der Beschickungsöffnung 3 und dem Zyklon 45 ist ein Absperrventil 46 vorgesehen, mit dem die Zufuhr von Luft und gegebenenfalls auch Schüttgut aus dem Zyklon 45 unterbrochen werden kann. In Figur 5 ist das Absperrventil 46 geöffnet, damit Schüttgut bzw. Luft in die Kammer 2 gelangen kann.

Das aus dem Zyklon 45 in die Kammer 2 der Entstaubungsanlage 40 eingebrachte Schüttgut 4, 5, 6 liegt dann auf dem ersten Abschnitt 17 des Bodens 13. Da dieser Abschnitt 17 mit Öffnungen 19, 20, 21 mit Siebfunktion versehen ist, wird der Staub über diese Öffnungen 19, 20, 21 durch die aus dem Zyklon 45 kommende Druckluft aus der Kammer 2 geblasen. Zusätzlich kann der Boden 13 natürlich durch den Antrieb 15 oder einen speziell dafür vorgesehenen Vibrationsantrieb (nicht dargestellt) in Vibration versetzt werden. Der Staub verlässt zusammen mit der Luft die Entstaubungsanlage 40 über die untere Öffnung 41 und gelangt über die Leitung 42 schließlich in den Auffangbehälter 43. Die Luft dient somit als Transportmedium für den Staub. In dem Auffangbehälter 43 wird der Staub gesammelt, wobei die Luft den Auffangbehälter 43 über den Filter 44 wieder verlassen kann. Staub kann hingegen nicht durch den Filter 44 gelangen und verbleibt deshalb in dem Auffangbehälter 43.

Nachdem der Staub aus der Kammer 2 entfernt wurde, wird das Absperrventil 46 geschlossen.

Anschließend wird der Boden 13 in die zweite Stellung bewegt.

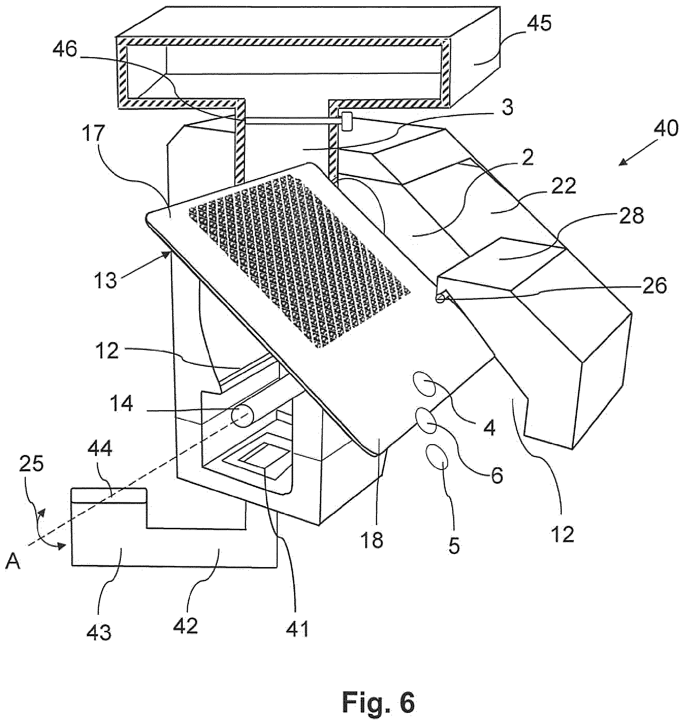

Die zweite Stellung des Bodens 13 ist in Figur 6 gezeigt. In dieser zweiten Stellung ist die zweite Ausgangsöffnung 12 offen, so dass das staubfreie Schüttgut 4, 5, 6 die Kammer 2 verlassen und zur Vermessung in ein Testgerät (nicht gezeigt) gelangen kann.

### Bezugszeichenliste

- 1: Entstaubungsanlage
- 2: Kammer
- 3: Beschickungsöffnung
- 4 bis 10: Schüttgüter
- 11: erste Ausgangsöffnung
- 12: zweite Ausgangsöffnung
- 13: Boden
- 14: Stange
- 15: Antrieb
- 16: Sichtfenster
- 17: erster Abschnitt
- 18: zweiter Abschnitt
- 19 bis 21: Öffnungen
- 22: Sichtfenster
- 23: Auffangbehälter
- 24: Griff
- 25: Bewegungspfeil
- 26: Dichtelement
- 28: Vorsprung
- 30: Anordnung
- 31: Testgerät
- 32: Oberseite
- 33: Öffnung
- 34: Vereinzelungsvorrichtung
- 40: Entstaubungsanlage
- 42: Leitung
- 43: Auffangbehälter
- 44: Filter
- 45: Zyklon
- 46: Absperrventil

## Patentansprüche

1. Entstaubungsanlage (1, 40) für ein Testgerät (31) für kleinvolumige Schüttgüter (4 bis 10) wobei die Entstaubungsanlage umfasst:
- eine Kammer (2) mit einer Beschickungsöffnung (3) zum Einbringen von kleinvolumigen Schüttgütern (4 bis 10) in die Kammer (2),
- wobei die Kammer (2) eine erste Ausgangsöffnung (11) für Staub sowie eine zweite Ausgangsöffnung (12) für Schüttgüter (4 bis 10) umfasst, wobei oberhalb der ersten Ausgangsöffnung (11) sowie der zweiten Ausgangsöffnung (12) ein um eine Achse (A) schwenkbarer Boden (13) angeordnet ist,
- wobei der Boden (13) einen ersten Abschnitt (17) sowie einen zweiten Abschnitt (18) aufweist,
- wobei der erste Abschnitt (17) Öffnungen (19 bis 21) aufweist, die eine Siebfunktion besitzen, so dass Staub über die erste Ausgangsöffnung (11) aus der Kammer (2) entfernbar ist,
- wobei der zweite Abschnitt (18) des Bodens (13) geschlossen ist und **dadurch gekennzeichnet, dass** in einer ersten Stellung der Boden (13) in Richtung der ersten Ausgangsöffnung (11) geneigt ist und der Boden (13) die zweite Ausgangsöffnung (12) verschließt
- und, dass der Boden (13) in einer zweiten Stellung in Richtung der zweiten Ausgangsöffnung (12) geneigt ist, wodurch diese zweite Ausgangsöffnung (12) geöffnet ist, so dass Schüttgut (4 bis 10) aus der Kammer (2) entfernbar ist.

2. Entstaubungsanlage nach Anspruch 1, **dadurch gekennzeichnet, dass** ein Dichtelement (26) vorgesehen ist, mit dem der zweite Abschnitt (18) des Bodens (13) in Kontakt steht, wenn der Boden (13) die erste Stellung einnimmt, so dass kein Staub durch die zweite Ausgangsöffnung (12) gelangt.

3. Verfahren zum Entfernen von Staub von Schüttgütern mittels der Entstaubungsanlage nach den Ansprüchen 1 bis 2, **gekennzeichnet durch** folgende aufeinanderfolgende Schritte:
3.1 der Boden wird in die erste Stellung gebracht
3.2. über die Beschickungsöffnung wird Schüttgut in die Kammer eingebracht, wobei das Schüttgut auf den ersten Abschnitt des Bodens gelangt, wobei der Staub durch die Öffnungen des Bodens fällt und so die Kammer über die erste Ausgangsöffnung verlässt
3.3der Boden wird in die zweite Stellung gebracht, wodurch die zweite Ausgangsöffnung geöffnet wird und das Schüttgut über diese zweite Ausgangsöffnung die Kammer verlässt.

4. Verfahren nach Anspruch 3,
**dadurch gekennzeichnet, dass** der Boden während des Schrittes 3.2 über einen Antrieb in Vibration versetzt wird.

5. Anordnung (30) umfassend die Entstaubungsanlage (1, 40) nach den Ansprüchen 1 bis 2 sowie ein Testgerät (31) für Schüttgüter (4 bis 10).

## Claims

1. Dedusting attachment (1, 40) for a testing device (31) for small-sized bulk goods (4 to 10), wherein the dedusting attachment comprises:
- a chamber (2) with a feed aperture (3) for introducing small-sized bulk goods (4 to 10) into the chamber (2),
- wherein the chamber (2) comprises a first outlet opening (11) for dust as well as a second outlet opening (12) for bulk goods (4 to 10),
- wherein above the first outlet opening (11) as well as of the second outlet opening (12) a bottom (13) swivellable about an axis (A) is disposed,
- wherein the bottom (13) comprises a first section (17) as well as a second section (18),
- wherein the first section (17) comprises perforations (19 to 21) having a sifting function such that dust can be removed from the chamber (2) across the first outlet opening (11),
- wherein the second section (18) of bottom (13) is closed and characterized thereby that in a first position the bottom (13) is inclined in the direction of outlet opening (11) and the bottom (13) blocks the second outlet opening (12)
- and that
the bottom (13) in a second position is inclined in the direction of the second outlet opening (12) whereby this second outlet opening (12) is opened such that bulk goods (4 to 10) can be removed from the chamber (2).

2. Dedusting attachment as in claim 1, **characterized in that** a sealing element (26) is provided with which the second section (18) of bottom (13) is in contact when the bottom (13) assumes the first position such that no dust moves through the second outlet opening (12).

3. Method for removing dust from bulk goods by means of the dedusting attachment according to claims 1 to 2, **characterized by** the following sequential steps:
3.1 the bottom is moved into the first position,
3.2 through the feed aperture bulk goods are introduced into the chamber whereby the bulk goods reach the first section of the bottom, whereby the dust falls through the perforations of the bottom and in this way leaves the chamber across the first output opening,
3.3 the bottom is moved into the second position whereby the second outlet opening is opened and the bulk goods leave the chamber across this second outlet opening.

4. Method as in claim 3, **characterized in that** during step 3.2 the bottom is set into vibration across a drive.

5. Arrangement (30) comprising the dedusting attachment (1, 40) as in claims 1 to 2 as well as a testing device (31) for bulk goods (4 to 10).

## Revendications

1. Installation de dépoussiérage (1, 40) pour un appareil de test (31) pour des produits en vrac de petit volume (4 à 10), l'installation de dépoussiérage comprenant :
- une chambre (2) avec une ouverture de chargement (3) pour l'introduction de produits en vrac de petit volume (4 à 10) dans la chambre (2),
- la chambre (2) comprenant une première ouverture de sortie (11) pour la poussière ainsi qu'une deuxième ouverture de sortie (12) pour les produits en vrac (4 à 10), un fond (13) pouvant pivoter autour d'un axe (A) étant agencé au-dessus de la première ouverture de sortie (11) ainsi que de la deuxième ouverture de sortie (12),
- le fond (13) présentant une première section (17) ainsi qu'une deuxième section (18),
- la première section (17) présentant des ouvertures (19 à 21) qui possèdent une fonction de tamisage, de telle sorte que la poussière peut être évacuée de la chambre (2) par le biais de la première ouverture de sortie (11),
- la deuxième section (18) du fond (13) étant fermée, et **caractérisée en ce que**
dans une première position, le fond (13) est incliné en direction de la première ouverture de sortie (11) et le fond (13) ferme la deuxième ouverture de sortie (12),
et **en ce que**, dans une deuxième position, le fond (13) est incliné en direction de la deuxième ouverture de sortie (12), cette deuxième ouverture de sortie (12) étant ainsi ouverte, de telle sorte que les produits en vrac (4 à 10) peuvent être évacués de la chambre (2).

2. Installation de dépoussiérage selon la revendication 1, **caractérisée en ce qu'un** élément d'étanchéité (26) est prévu, avec lequel la deuxième section (18) du fond (13) est en contact lorsque le fond (13) occupe la première position, de telle sorte que la poussière ne passe pas par la deuxième ouverture de sortie (12).

3. Procédé d'évacuation de poussière de produits en vrac au moyen de l'installation de dépoussiérage selon les revendications 1 à 2, **caractérisé par** les étapes successives suivantes :
3.1 le fond est amené dans la première position,
3.2. des produits en vrac sont introduits dans la chambre par le biais de l'ouverture de chargement, les produits en vrac arrivant sur la première section du fond, la poussière tombant à travers les ouvertures du fond et sortant ainsi de la chambre par le biais de la première ouverture de sortie,
3.3 le fond est amené dans la deuxième position, la deuxième ouverture de sortie étant ainsi ouverte et les produits en vrac sortant de la chambre par le biais de cette deuxième ouverture de sortie.

4. Procédé selon la revendication 3, **caractérisé en ce que** le fond est mis en vibration pendant l'étape 3.2 par le biais d'un entraînement.

5. Agencement (30) comprenant l'installation de dépoussiérage (1, 40) selon les revendications 1 à 2 ainsi qu'un appareil de test (31) pour produits en vrac (4 à 10).
